# EUROPEAN PATENT APPLICATION

(11) **EP 4 804 047 A1**
(43) Date of publication of application: **09.09.2026**
(21) Application number: 26157016.2
(22) Date of filing: 06.02.2026
(51) Int. Cl.: G06F 16/2455

(54) **ANALYZING DATA STREAMS USING LARGE LANGUAGE MODELS**

(30) Priority: 04.03.2025 US 202519064347
(71) Applicant: VANTIQ, INC., Walnut Creek, CA 94596 (US)
(72) Inventor: BUTTERWORTH, Paul, Alamo, CA 94507 (US)
(74) Representative: Murgitroyd & Company

(57) **Abstract**

A system and method comprising receiving a data stream including a plurality of events from sensors within an Internet of Things (IoT) computing environment, applying a rate reduction method to generate an adjusted data stream by adjusting a rate of the data stream, the rate reduction method being based on an estimated response time for a stream analysis model, and transmitting the adjusted data stream to the stream analysis model. The system further updates the estimated response time for the stream analysis model based on receiving, from the stream analysis model, an output based on an event from the adjusted data stream. The system stores the event and the output, and transmits the event and the output to an automatic control system.

## Description

### CLAIM OF PRIORITY

This application claims the benefit of priority to U.S. Application Serial No. 19/070,347, filed on March 04, 2025.

### TECHNICAL FIELD

The disclosed subject matter relates generally to the technical field of data stream analysis systems and, in one specific example, to a solution for analyzing data streams using large language models (LLMs).

### BACKGROUND

Given the importance of near real-time analysis of fast-moving data streams, significant effort has been invested in developing technologies that can accurately and promptly process such streams.

### SUMMARY

The invention is a system, computer-implemented method and processor as defined in the appended claims.

### BRIEF DESCRIPTION OF SEVERAL VIEWS OF THE DRAWINGS

To easily identify the discussion of any particular element or act, the most significant digit or digits in a reference number may include the figure number in which that element is first introduced.
FIG. 1 is a network diagram depicting a system within which various examples described herein may be deployed.
FIG. 2 is a diagrammatic representation of a stream analysis system, according to some examples.
FIG. 3 is a flowchart that illustrates a method implemented by a stream analysis system, according to some examples.
FIG. 4 is a flowchart that illustrates a method implemented by a stream analysis system, according to some examples.
FIG. 5 is a block diagram showing a machine-learning (ML) program, according to some examples.
FIG. 6 is a block diagram illustrating a software architecture that may be installed on a machine, according to some examples.
FIG. 7 is a block diagram illustrating components of a machine, according to some examples, able to read instructions from a machine-readable medium and perform any one or more of the methodologies discussed herein.

### DETAILED DESCRIPTION

Given their capabilities, large language models (LLMs) are being used for a variety of query-answering and data analysis tasks in the context of a variety of inputs. However, current LLM-based agents exhibit a query response time that is measured in seconds rather than milliseconds or microseconds. This performance constraint makes it difficult to use current LLM-based agents for analyzing near real-time, event streams irrespective of whether the events are produced by a single heterogeneous stream or the events are sourced from multiple streams.

Examples disclosed herein may include a stream analysis system that processes an incoming data stream to make it compatible with the use of one or more stream analysis models. In some examples, the stream analysis system takes as input an event stream. The stream analysis models can include trained machine learning (ML) models, such as large language models (LLMs). The stream analysis system reduces a potentially high event rate to a low rate compatible with the use of a stream analysis model, such as an LLM, for analyzing the event stream. The stream analysis system dynamically determines the response time for the stream analysis model by measuring the actual response times associated with the processing of application prompts to produce an estimated response time. The system then reduces the event rate by selecting one or more event rate reduction strategies from a set of event rate reduction strategies and configuring them based on the estimated or measured response time of the target stream analysis model. The strategies selected are determined by the type of event stream analysis that is most effective for a given event stream or set of event streams. The stream analysis system transmits the processed event stream to the stream analysis model, and retrieves the output and/or analysis that is returned to a querying agent, caller, or API, or that is transmitted to a further system or to a downstream component.

In some examples, the stream analysis system receives a data stream that includes a plurality of events from sensors within an Internet of Things (IoT) computing environment. The stream analysis system applies a rate reduction method to generate an adjusted data stream by adjusting a rate of the data stream, the rate reduction method being based on a stored estimated response time for a stream analysis model.

The rate reduction method can identify an event sequence in the data stream and/or generate a compound event corresponding to the event sequence. In some examples, the rate reduction method applies one or more processing rules to the data stream to identify a subset of high-value events. In some examples, the rate reduction method aggregates events using a sliding window of a pre-determined size, the aggregating of the events further comprising computing a value based on combining the aggregated events. In some examples, the rate reduction method samples the events in the data stream. In some examples, the stream analysis system accesses or receives an additional data stream including additional events from the sensors within the Internet of Things (IoT) computing environment, and the rate reduction method correlates the events in the data stream with the additional events in the additional data stream to generate a unified data stream for transmitting to the stream analysis model.

The stream analysis system can transmit the adjusted data stream to the stream analysis model. The stream analysis system can identify an event in the event stream that corresponds to a triggering event associated with the stream analysis model, and/or retrieve a stream analysis model output based on the identified event. The stream analysis system can update a current response time estimate for the stream analysis model based on an observed response time associated with the receiving of the output from the stream analysis model. In some examples, the stream analysis system computes, at a pre-determined evaluation interval, a difference between the stored estimated response time and the current response time estimate for the stream analysis model, and upon determining that a magnitude of the difference transgresses a pre-defined threshold, updates the stored estimated response time to correspond to the current response time estimate. The stream analysis system can update the parameters of the one or more rate reduction methods based on the updated estimated response time.

In some examples, the stream analysis system can store the event and/or the output, and/or transmit the event and/or the output to a downstream system component or client system for further use (e.g., to an automatic control component and/or system).

The stream analysis disclosed herein can be used in a variety of domains, for a variety of data or event streams. For example, a data stream in the financial domain can include individual transactions that are recorded in real-time, and which can be used for data analytics, fraud detection, and so forth. Alternatively, in a retail environment, events could include customer check-ins, purchases, or other interactions within a store, captured through various customer-facing technologies. Such data can be used by businesses and/or advertisers for business intelligence purposes and/or better ad targeting or improving customer loyalty. In a healthcare setting, events could be patient monitoring data points such as heart rate, blood pressure readings, or other vital signs collected from medical devices. Analyzing such events can result in high-quality signals for health monitoring and/or diagnostics systems.

Given the IT and/or cybersecurity domains, events could be log entries from servers, network equipment, or applications that provide real-time data on system performance, security breaches, or other operational metrics. In industrial or IoT settings, sensor outputs such as temperature readings, machine operational status, or environmental conditions could be streamed as events. Events could correspond to tuples including a sensor ID, timestamp, measured values, and so forth. For example, temperature sensors in a smart home can send data about the home's temperature to a central system that uses this information to adjust heating or cooling settings automatically. Alternatively, a smart factory can have machines that send real-time data about their operational status, performance metrics, or maintenance needs, data that can be analyzed by the stream analysis system for the benefit of a maintenance and/or control system, and so forth.

In some examples, the system can be used to help with traffic management. For example, a stream analysis model (e.g., using one or more LLMs) can be used to analyze data from social media, traffic reports, and /or sensor descriptions, in order to predict traffic congestion points. By detecting and/or highlighting patterns, the stream analysis system can further help better traffic routing, for example by helping to alleviate congestion during peak hours or in case of accidents.

In some examples, the system can be used to help with supply chain optimization. For example, the stream analysis model used (e.g., including one or more LLMs) can process unstructured data from emails, supplier communications, and/or market trends to forecast supply needs and potential disruptions.

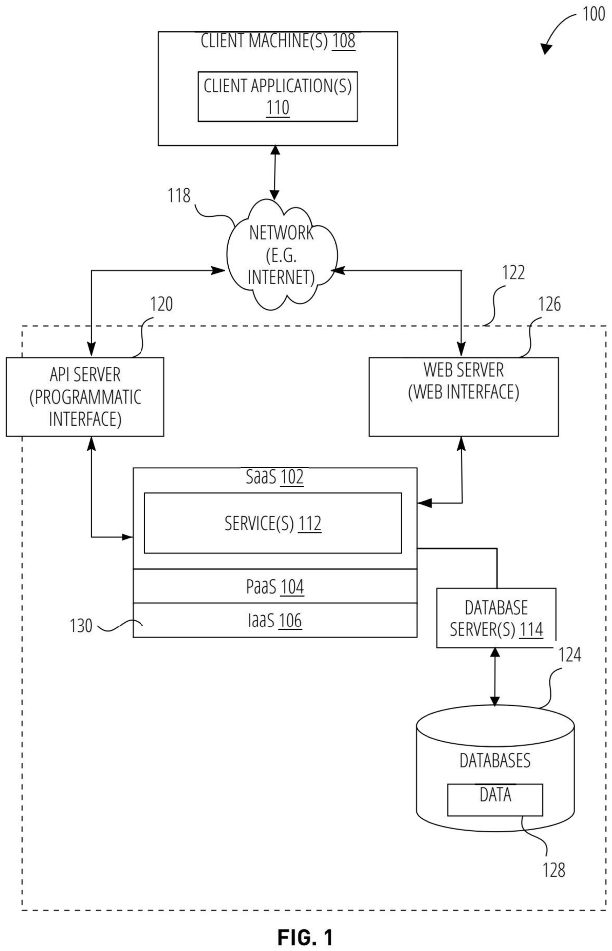

FIG. 1 is a network diagram depicting a system 100 within which various examples described herein may be deployed. A networked system 122 in the example form of a cloud computing service, such as Microsoft Azure or another cloud service, provides server-side functionality via a network 118 (e.g., the Internet or Wide Area Network [WAN]) to one or more endpoints (e.g., the client machine(s) 108). FIG. 1 illustrates client application(s) 110 on the client machine(s) 108. Examples of client application(s) 110 may include a web browser application, such as the Internet Explorer browser developed by Microsoft Corporation of Redmond, Washington or other applications supported by an operating system of the device, such as applications supported by Windows, iOS or Android operating systems. Examples of such applications include e-mail client applications executing natively on the device, such as an Apple Mail client application executing on an iOS device, a Microsoft Outlook client application executing on a Microsoft Windows device, or a Gmail client application executing on an Android device. Examples of other such applications may include calendar applications, file-sharing applications, contact center applications, digital content creation applications (e.g., game development applications) or game applications. Each of the client application(s) 110 may include a software application module (e.g., a plug-in, add-in, or macro) that adds a specific service or feature to the application.

An API server 120 and a web server 126 are coupled to, and provide programmatic and web interfaces respectively to, one or more software services, which may be hosted on a software-as-a-service (SaaS) layer or platform 102. The SaaS platform may be part of a service-oriented architecture, being stacked upon a platform-as-a-service (PaaS) layer 104 which, may be, in turn, stacked upon an infrastructure-as-a-service (IaaS) layer 106 (e.g., in accordance with standards defined by the National Institute of Standards and Technology [NIST]).

While the applications (e.g., service(s) 112) are shown in FIG. 1 to form part of the networked system 122, in alternative embodiments, the applications 112 may form part of a service that is separate and distinct from the networked system 122.

Further, while the system 100 shown in FIG. 1 employs a cloud-based architecture, various embodiments are, of course, not limited to such an architecture, and could equally well find application in a client-server, distributed, or peer-to-peer system, for example. The various server services or applications 112 could also be implemented as standalone software programs. Additionally, although FIG. 1 depicts machine(s) 108 as being coupled to a single networked system 122, it will be readily apparent to one skilled in the art that client machine(s) 108, as well as client application(s) 110 (such as game applications), may be coupled to multiple networked systems, such as payment applications associated with multiple payment processors or acquiring banks (e.g., PayPal, Visa, MasterCard, and American Express).

Web applications executing on the client machine(s) 108 may access the various applications 112 via the web interface supported by the web server 126. Similarly, native applications executing on the client machine(s) 108 may access the various services and functions provided by the applications 112 via the programmatic interface provided by the API server 120. For example, the third-party applications may, utilizing information retrieved from the networked system 122, support one or more features or functions on a website hosted by the third party. The third-party website may, for example, provide one or more promotional, marketplace, or payment functions that are integrated into or supported by relevant applications of the networked system 122.

The server applications may be hosted on dedicated or shared server machines (not shown) that are communicatively coupled to enable communications between server machines. The server applications 112 themselves are communicatively coupled (e.g., via appropriate interfaces) to each other and to various data sources, so as to allow information to be passed between the server applications 112 and so as to allow the server applications 112 to share and access common data. The server applications 112 may furthermore access one or more databases 124 via the database server(s) 114. In examples, various data items are stored in the databases 124, such as the system's data items 128. In examples, the system's data items may be any of the data items described herein.

Navigation of the networked system 122 may be facilitated by one or more navigation applications. For example, a search application (as an example of a navigation application) may enable keyword searches of data items included in the one or more databases 124 associated with the networked system 122. A client application may allow users to access the system's data items 128 (e.g., via one or more client applications). Various other navigation applications may be provided to supplement the search and browsing applications.

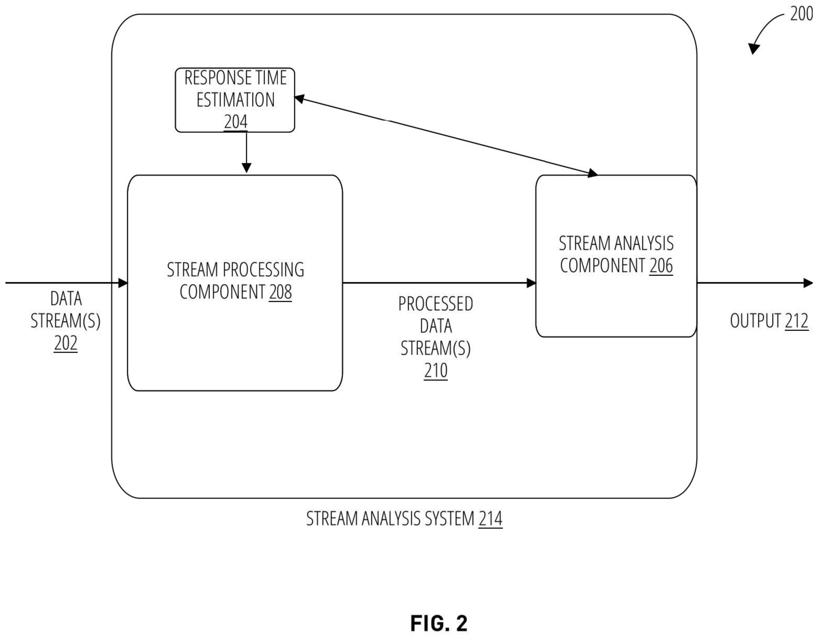

FIG. 2 is a diagrammatic representation 200 of a stream analysis system 214, according to some examples. The stream analysis system 214 includes at least a stream processing component 208, a response time estimation 204, and a stream analysis component 206. The stream analysis system 214 takes as input a data stream 202 and produces an output 212, corresponding to an analysis of the data stream 202. In some examples, the stream analysis system 214 takes as input multiple data streams rather than a single data stream and/or analyzes each data stream separately or analyzes a combination of the data streams, as detailed further below.

In some examples, the data stream 202 is an event stream with a potentially high event rate. The stream analysis component 206 can rely on one or more stream analysis models that are associated with an input processing latency: for example, given an input, the stream analysis model can take an average time T to produce an answer and/or analysis. In some examples, such stream analysis models can be agents based on one or more large language models (LLMs).

The stream analysis system 214 uses the response time estimation 204 component to dynamically determine the response time for the stream analysis component 206. Given one or more application prompts, the stream analysis system 214 measures the actual response times associated with the processing of the application prompts and produces an estimate of the response time for the stream analysis system 214. The estimate of the response time can be computed using one or more aggregate statistics and/or combination functions (e.g., median response time, weighted average of response times, an exponential moving average of response times, and so forth). In some examples, the response time is updated periodically and/or offline. In some examples, the response time is updated online, according to a predetermined schedule, as part of the stream analysis system 214's handling of the incoming event stream(s) (see below for more details).

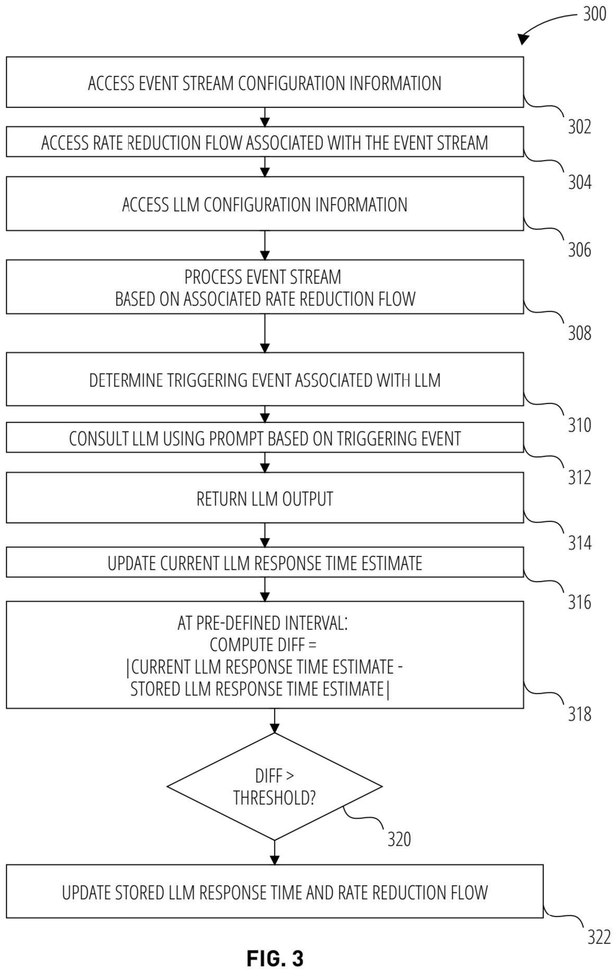

The stream analysis system 214 uses the stream processing component 208 to process the data stream and generate a processed data stream 210 that is transmitted it to the stream analysis component 206. In some examples, the processing may include reducing the rate of the data stream (e.g., slowing down the data stream) from a potentially high rate to a lower rate compatible with the use of the available stream analysis component 206 for analyzing the data stream. In some examples, the stream processing component 208 reduces the stream rate (e.g., the event rate in the case of an event stream) by using one or more rate reduction strategies from a set of candidate rate reduction strategies, and/or configuring them based on the estimated response time for the stream analysis component 206. In some examples, the stream analysis system 214 has access to one or more stream analysis components 206, and/or selects such a stream analysis component option based on one or more of a set of parameters associated with each component (see, e.g., FIG. 3 for examples). FIG. 2 illustrates a stream analysis component 206 that is included in the stream analysis system 214; however, in some examples, the stream analysis system 214 could be focused on the stream processing and rate estimation operations, while the one or more stream analysis components 206 could be external to, and connected to, the stream analysis system 214.

Each data stream is bound to one or more rate reduction flow(s), consisting of one or more rate reduction steps, each rate reduction flow being associated with a rate reduction strategy (see below for characteristics of rate reduction flows). In some examples, a rate reduction flow can be associated with more than one data stream (e.g., a stream correlation rate reduction strategy operates on at least two data streams).

As the content of data stream 202 arrives, the stream analysis system 214, via its stream processing component 208, processes it in accordance with the rate reduction flow(s) bound to the respective data stream 202. The stream processing component 208 determines if a data stream 202 point, portion and/or event should be analyzed by the stream analysis component 206. If so, the stream analysis component 206 is called with the respective point, portion and/or event. The result of the analysis is returned to a query agent, caller, API, downstream component, and so forth. In some examples the query agent, caller and/or API is the source of the data stream 202, while in others it is separate from the data stream source. In some examples, the stream analysis system 214, via the response time estimation 204, monitors the response time(s) of the stream analysis component 206 as it provides results to analysis requests, and/or updates the estimated response time for the stream analysis component 206, as further described in FIG. 3.

In the following, the discussion focuses on an example event stream and/or reducing the event rate, merely for example. As mentioned above, data stream processing can be applied to other data stream types, and can involve one or more data streams.

### Example: Rate Reduction Strategies

Example rate reduction strategies used by the stream processing component 208 for a data stream 202 (such as an event stream) include:
1. Sampling the data stream 202 at a rate compatible with the estimated response time of the stream analysis component 206.
2. Identifying one or more sequences of events in data stream 202 based on a predetermined set of criteria (e.g., sequence length, event type patterns, and so on), and generating a single compound event for each event sequence. The event sequence identification and/or compound event generation takes as input the estimated response time, and ensures that the compound event is generated and/or transmitted at a rate compatible with the estimated response time of the stream analysis component 206.
3. Applying one or more of a set of event processing rules to filter the data stream 202 and identify semantically meaningful events that are transmitted to the stream analysis component 206. The identification and/or transmission of semantically meaningful events takes into account the estimated response time of the stream analysis component 206, making sure the semantically meaningful events are received by the stream analysis component 206 at a rate compatible with the respective estimated response time.
4. Aggregating a series of events into windowed events using a fixed window and/or sliding window, with the window size set to one that is compatible with the estimated response time of the stream analysis component 206. For example, in the case of an estimated response time of 45 seconds, the stream processing component 208 can identify each series of numerical value events occurring within a fixed 45 second window, compute and/or transmit an average for each event series. In the case of an estimated response time of 75 seconds, the stream processing component 208 can convert the event stream into a series of moving averages that emit the current moving average every 75 seconds. In some examples, the stream processing component 208 can adjust the size of the fixed or sliding window based on the observed response time of the stream analysis component 206. For example, if the response time of the stream analysis component 206 is greater than a pre-determined or current window size, the pre-determined or current window size is increased such that the window submissions (e.g., aggregated windowed events, etc.) are emitted at the rate the stream analysis component 206 can process them. If the stream analysis component 206 response time is smaller than the window size, the window size is reduced accordingly since the stream analysis component 206 can support smaller windows. In some examples, the stream processing component 208 adjusts the size of the pre-determined or current window by observing an exponential moving average of response times of the stream analysis component 206. In some examples, the stream processing component 208 uses in the adjustment of the size of the pre-determined or current window a parameter corresponding to an indicator of a rate of window size adjustment (e.g., a time-based rate, etc.).
5. Given multiple data streams 202, the stream processing component 208 can correlate events from multiple event streams into a single event stream effectively reducing the overall event rate by combining the correlated events. In the case of multiple data streams, the number of data streams can be a predetermined number K (K > 1). Alternatively, the stream analysis system 214 can accommodate dynamically joining additional streams as needed.
6. The stream processing component 208 can use combinations of the above strategies designed to produce a processed event stream compatible with the estimated response of the stream analysis component 206. For example, a set of event streams can be correlated, producing a new event stream which is then sampled.

Once the rate reduction scheme has been applied to the event stream, the reduced rate event stream is transmitted to the stream analysis components 206. For example, a reduced rate event is incorporated into a prompt for a LLM, and the LLM is invoked.

FIG. 3 illustrates a method 300 as implemented by the stream analysis system 214, according to some examples. At operation 302, stream analysis system 214, for example via stream processing component 208, accesses configuration information for one or more data streams 202 (e.g., event streams). In the following, an event stream is used merely as an example of data stream 202.

### Example: Event Stream Characteristics

In some examples, event stream characteristics include:
a) Identity of an event stream.
b) Schema describing the data payload for each event produced by the event stream. The event stream includes events with multiple types; multiple schemas are defined, one for each event type.
c) Rate at which the event stream produces events.

As further described below, the stream analysis system 214, via the stream processing component 208, can implement one or more rate reduction strategies for the event stream or for multiple event streams. One such strategy includes correlating events from multiple streams, to generate a new event stream. To implement such a strategy, the stream analysis system 214 configures and/or accesses configuration information as seen at least in d) and e) below:
d) The configuration information for the stream analysis system 214 may include a description of the correlation properties for the stream and any transformation applied to the correlation properties, for use in matching against the correlation properties for other streams.
e) In an example, the stream analysis system 214 is configured to potentially correlate events from multiple event streams using the time of creation or the time of arrival. In such a case, the configuration information may include:
   1. The size of the window in which the correlated timestamps occur in order for the events to correlate.
   2. Ordering constraints, such as, for example "an event from stream A occurs before an event from stream B in order for the two events to be correlated."

At operation 304, stream analysis system 214, for example via stream processing component 208, accesses information for one or more rate reduction flows associated with the event stream. Rate reduction flows consist of a series of rate reduction steps. A rate reduction flow is associated with a rate reduction strategy to be applied to a stream.

### Example: Rate Reduction Flow Characteristics

Each rate reduction flow is defined by one or more of the following characteristics:
1. The rate reduction strategies to be applied and/or the order in which they are applied.
2. Configuration parameters for each rate reduction strategy, such as:
   a) Event stream(s) to which the strategy is applied.
   b) Strategy specific parameters.

For example, applying a filter strategy requires the filtering rules to be applied to the stream to be specified.

3. Rate reduction flows can also reference other data accessible in the environment and incorporate it into the payload for the flow's output event. For example, the event may incorporate both the real-time event produced by the rate reduction flow and historical data retrieved from a database.

4. Information identifying a stream analysis component 206 (here, LLM) to invoke. Additionally, the information can include a prompt template to be used to produce a prompt for the LLM.

At operation 306, the stream analysis system 214, for example via stream processing component 208, accesses LLM configuration information corresponding to configuration information for a stream analysis component 206.

### Example: Stream Analysis Component Characteristics

In some examples, a stream analysis component 206 corresponding to a LLM is associated with one or more of the following characteristics:
1. Identity.
2. Access requirements.
3. Prompt template into which the rate limited events are to be inserted, to generate prompt to the LLM.
4. Form of expected LLM response (e.g., text, code, JSON, etc.).
5. Default expected response time (in milliseconds).
6. Estimated response time (or expected response time) - this value is initially set to the default expected response time. In some examples, the value is updated periodically to the observed response time by sampling an exponential moving average of the response time measurements.
7. LLM response time evaluation interval, and/or LLM response time change delta. These parameters are used by the stream analysis system 214, via its response time estimation 204 component, to check and/or potentially update its estimate for the response time of the stream analysis component 206 (here, corresponding to the LLM), as seen below.
8. Rate limited event that triggers call to LLM.

At operation 308, the stream processing component 208 processes an incoming data stream 202 (e.g., an event stream) using the associated rate reduction flow for the data stream. In some examples, multiple data streams are processed, as indicated above, in order to generate one processed stream.

At operation 310, the stream analysis system 214 analyzes the processed data stream 202 (e.g., the event stream) and determines a data stream point, portion (or sample) or event to be submitted for analysis by the stream analysis component 206 (here, by the LLM). In some examples, this operation involves determining that the respective data stream 202 point, portion and/or event matches a definition of a triggering event included in configuration information for the stream analysis component 206. If so, the stream analysis component 206 (e.g., the LLM) is called with the respective point, portion and/or event at operation 312. In some examples, operation 312 involves generating a prompt by substituting properties from the payload of the triggering event into the prompt template bound to the LLM for this rate reduction flow. The prompt thus generated is presented to the LLM.

At operation 314, the stream analysis system 214 returns output retrieved from the LLM to a querying agent, caller, API and/or downstream component.

At operation 316, the stream analysis system 214, via its response time estimation 204 component, updates a running estimate of the LLM response time (e.g., a current estimate) using the response time recorded while consulting the LLM at operation 312. In some examples, the response time estimation 204 component can maintain a running estimate corresponding to a computed exponential moving average of LLM response times (e.g., other aggregate statistics can be used).

At operation 318, the stream analysis system 214 compares a stored estimate of the LLM response time with the running estimate (e.g., the current estimate) of the LLM response time. In some examples, this comparison is performed at a time interval specified by the LLM response time evaluation interval parameter in the configuration settings for the LLM. If, at operation 320, the magnitude of the difference between the two response times is determined to be greater than a pre-defined threshold (e.g., the LLM response time change delta), the response time estimation 204 updates the stored LLM response time to be the running estimate of the LLM response time (see operation 322). Furthermore, the rate reduction flow is inspected and all parameters dependent on the expected response time are adjusted to reflect the updated response time estimate (see operation 322).

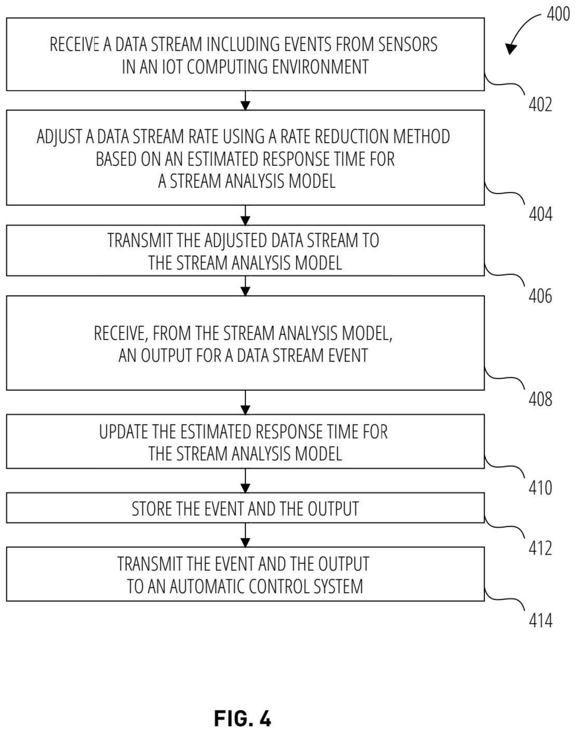

FIG. 4 is a flowchart illustrating a method 400 as implemented by the stream analysis system 214, according to some examples.

At operation 402, the stream analysis system 214 accesses or receives a data stream including events from sensors in an IoT computing environment. At operation 404, the stream analysis system 214 adjusts a data stream rate using a rate reduction method based on an estimated response time for a stream analysis model (e.g., as implemented by the stream analysis component 206). At operation 406, the stream analysis system 214 transmits the adjusted data stream to the stream analysis model. The stream analysis system 214 receives, from the stream analysis model, an output for a data stream event (see operation 408). The estimated response time for the stream analysis model is updated based on the latency of receiving the output (see operation 410). The stream analysis system 214 stores the output and/or event at operation 412. The stream analysis system 214 transmits the event and/or the output to an automatic control system at operation 414.

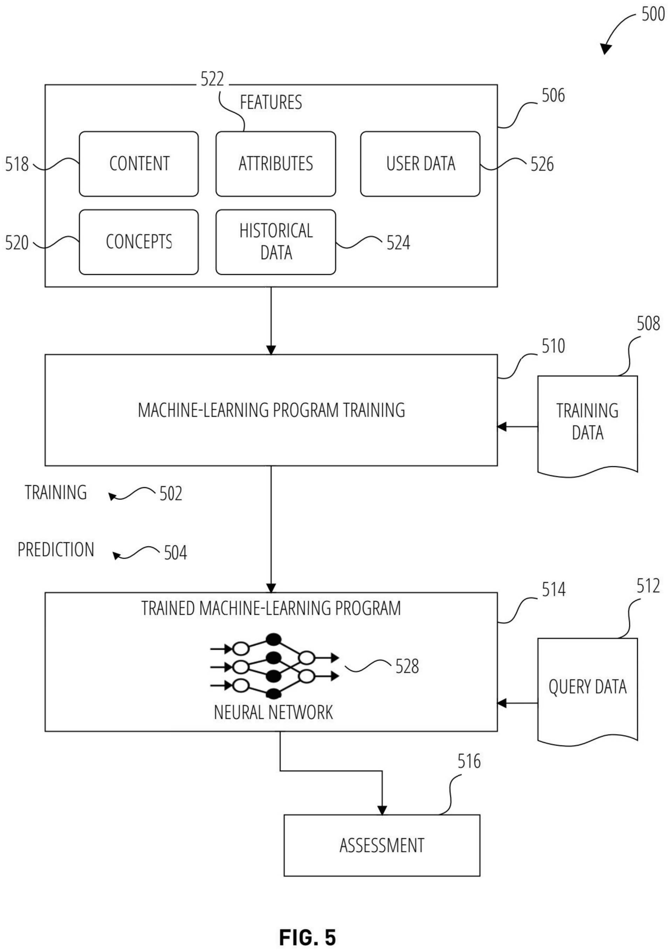

FIG. 5 is a block diagram showing a machine-learning program 500 according to some examples. The machine-learning programs 500, also referred to as machine-learning algorithms or tools, are used to train machine-learning models, which can be used by the agents described at least in FIG. 2 of the disclosure herein.

Machine learning is a field of study that gives computers the ability to learn without being explicitly programmed. Machine learning explores the study and construction of algorithms, also referred to herein as tools, that may learn from or be trained using existing data and make predictions about or based on new data. Such machine-learning tools operate by building a model from example training data 508 in order to make data-driven predictions or decisions expressed as outputs or assessments (e.g., assessment 516). Although examples are presented with respect to a few machine-learning tools, the principles presented herein may be applied to other machine-learning tools.

In some examples, different machine-learning tools may be used. For example, Logistic Regression (LR), Naive-Bayes, Random Forest (RF), Gradient Boosted Decision Trees (GBDT), neural networks (NN), matrix factorization, and Support Vector Machines (SVM) tools may be used. In some examples, one or more ML paradigms may be used: binary or n-ary classification, semi-supervised learning, etc. In some examples, time-to-event (TTE) data will be used during model training. In some examples, a hierarchy or combination of models (e.g. stacking, bagging) may be used.

Two common types of problems in machine learning are classification problems and regression problems. Classification problems, also referred to as categorization problems, aim at classifying items into one of several category values (for example, is this object an apple or an orange?). Regression algorithms aim at quantifying some items (for example, by providing a value that is a real number).

The machine-learning program 500 supports two types of phases, namely a training phase 502 and prediction phase 504. In a training phase 502, supervised learning, unsupervised or reinforcement learning may be used. For example, the machine-learning program 500: (1) receives features 506 (e.g., as structured or labeled data in supervised learning) and/or (2) identifies features 506 (e.g., unstructured or unlabeled data for unsupervised learning) in training data 508. In a prediction phase 504, the machine-learning program 500 uses the features 506 for analyzing input or (query) data 512 to generate outcomes or predictions, as examples of an assessment 516.

In the training phase 502, feature engineering is used to identify features 506 and may include identifying informative, discriminating, and independent features for the effective operation of the machine-learning program 500 in pattern recognition, classification, and regression. In some examples, the training data 508 includes labeled data, which is known data for pre-identified features 506 and one or more outcomes. Each of the features 506 may be a variable or attribute, such as individual measurable property of a process, article, system, or phenomenon represented by a data set (e.g., the training data 508). Features 506 may also be of different types, such as numeric features, strings, and graphs, and may include one or more of content 518, concepts 520, attributes 522, historical data 524 and/or user data 526, merely for example.

In training phases 502, the machine-learning program 500 uses the training data 508 to find correlations among the features 506 that affect a predicted outcome or assessment 516.

With the training data 508 and the identified features 506, the machine-learning program 500 is trained during the training phase 502 at machine-learning program training 510. The machine-learning program 500 appraises values of the features 506 as they correlate to the training data 508. The result of the training is the trained machine-learning program 514(e.g., a trained or learned model).

Further, the training phases 502 may involve machine learning (such as deep learning), in which the training data 508 is structured (e.g., labeled during preprocessing operations), and the trained machine-learning program 514 implements a relatively simple neural network 528 (or one of other machine learning models, as described herein) capable of performing, for example, classification and clustering operations. In other examples, the training phase 502 may involve training data 508 which is unstructured, and the trained machine-learning program 514 implements a deep neural network 528 that is able to perform both feature extraction and classification/clustering operations.

A neural network 528 generated or trained during the training phase 502 and implemented within the trained machine-learning program 514, may include a hierarchical (e.g., layered) organization of neurons. For example, neurons (or nodes) may be arranged hierarchically into a number of layers, including an input layer, an output layer, and multiple hidden layers. The layers within the neural network 528 can have one or many neurons, and the neurons operationally compute a small function (e.g., activation function). For example, if an activation function generates a result that transgresses a particular threshold, an output may be communicated from that neuron (e.g., transmitting neuron) to a connected neuron (e.g., receiving neuron) in successive layers. Connections between neurons also have associated weights, which define the influence of the input from a transmitting neuron to a receiving neuron.

In some examples, the neural network 528 may also be one of several different types of neural networks, such as a single-layer feed-forward network, a Multilayer Perceptron (MLP), an Artificial Neural Network (ANN), a Recurrent Neural Network (RNN), a Long Short-Term Memory Network (LSTM), a Bidirectional Neural Network, a symmetrically connected neural network, a Deep Belief Network (DBN), a Convolutional Neural Network (CNN), a Generative Adversarial Network (GAN), an Autoencoder Neural Network (AE), a Restricted Boltzmann Machine (RBM), a Hopfield Network, a Self-Organizing Map (SOM), a Radial Basis Function Network (RBFN), a Spiking Neural Network (SNN), a Liquid State Machine (LSM), an Echo State Network (ESN), a Neural Turing Machine (NTM), or a Transformer Network, merely for example.

During prediction phases 504 the trained machine-learning program 514 is used to perform an assessment. Query data 512 is provided as an input to the trained machine-learning program 500, and the trained machine-learning program 514 generates the assessment 516 as output, responsive to receipt of the query data 512.

In some examples, the trained machine-learning program 514 may be a generative AI model. Generative AI is a term that may include any type of artificial intelligence that can create new content from training data 508. For example, generative AI can produce text, images, video, audio, code, or synthetic data similar to the original data but not identical.

Some of the techniques that may be used in generative AI are:
- Convolutional Neural Networks (CNNs): CNNs may be used for image recognition and computer vision tasks. CNNs may, for example, be designed to extract features from images by using filters or kernels that scan the input image and highlight important patterns.
- Recurrent Neural Networks (RNNs): RNNs may be used for processing sequential data, such as speech, text, and time series data, for example. RNNs employ feedback loops that allow them to capture temporal dependencies and remember past inputs.
- Generative adversarial networks (GANs): GNNs may include two neural networks: a generator and a discriminator. The generator network attempts to create realistic content that can "fool" the discriminator network, while the discriminator network attempts to distinguish between real and fake content. The generator and discriminator networks compete with each other and improve over time.
- Variational autoencoders (VAEs): VAEs may encode input data into a latent space (e.g., a compressed representation) and then decode it back into output data. The latent space can be manipulated to generate new variations of the output data. VAEs may use self-attention mechanisms to process input data, allowing them to handle long text sequences and capture complex dependencies.
- Transformer models: Transformer models may use attention mechanisms to learn the relationships between different parts of input data (such as words or pixels) and generate output data based on these relationships. Transformer models can handle sequential data, such as text or speech, as well as non-sequential data, such as images or code.

In generative AI examples, the output prediction/inference data include predictions, translations, summaries, or media content.

In some generative AI examples, the trained machine-learning program 514 can be a Large Language Model (LLM). LLMs can perform tasks such as recognizing, translating, predicting, or generating text (or other content), and can be used for text classification, question answering, document summarization, text generation, as well as plan generation, code generation, prediction problems (e.g., predicting protein structures), and so forth. Examples of LLMs include GPT-3.5, GPT-4, Bard, Cohere, PaLM, Falcon, Claude, Llama, Orca, Phi-1, Jurassic and more.

A trained neural network model (e.g., a trained machine learning trained machine-learning program 514 using a neural network 528) may be stored in a computational graph format, according to some examples. An example computational graph format is the Open Neural Network Exchange (ONNX) file format, an open, flexible standard for storing models which allows reusing models across deep learning platforms/tools, and deploying models in the cloud (e.g., via ONNX runtime).

In examples, one or more artificial intelligence agents, such as one or more machine-learned algorithms or models and/or a neural network of one or more machine-learned algorithms or models may be trained iteratively (e.g., in a plurality of stages) using a plurality of sets of input data. For example, a first set of input data may be used to train one or more of the artificial agents. Then, the first set of input data may be transformed into a second set of input data for retraining the one or more artificial intelligence agents. The continuously updated and retrained artificial intelligence agents may then be applied to subsequent novel input data to generate one or more of the outputs described herein.

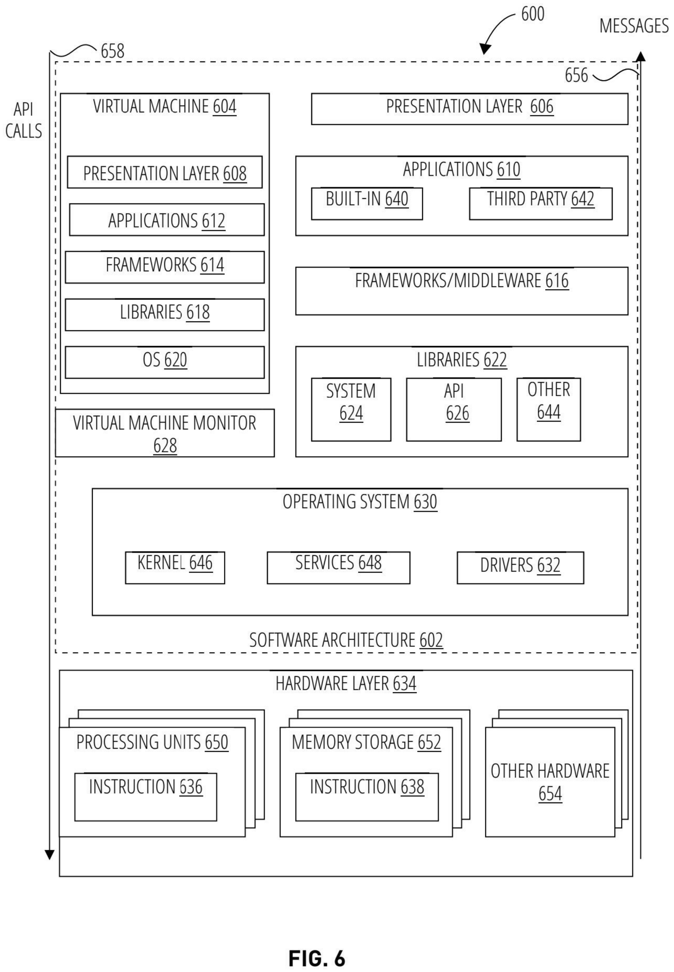

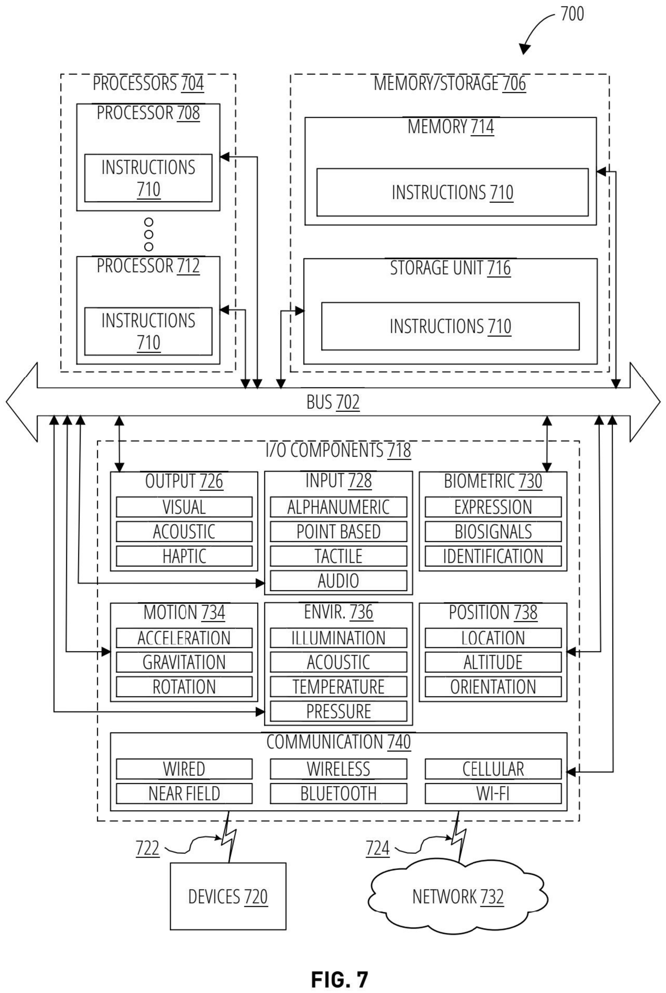

FIG. 6 is a block diagram 600 illustrating an example of a software architecture 602 that may be installed on a machine, according to some examples. FIG. 6 is merely a nonlimiting example of software architecture, and it will be appreciated that many other architectures may be implemented to facilitate the functionality described herein. The software architecture 602 may be executed on hardware such as a machine 700 of FIG. 7 that includes, among other things, processors 704, memory/storage 706, and I/O components 718. A representative hardware layer 634 is illustrated and can represent, for example, the machine of FIG. 7. The representative hardware layer 634 comprises one or more processing units 650 having associated executable instructions 636. The executable instructions 636 represent the executable instructions of the software architecture 602. The hardware layer 634 also includes memory or memory storage 652, which also has the executable instructions 638. The hardware layer 634 may also comprise other hardware 654, which represents any other hardware of the hardware layer 634 such as the other hardware illustrated as part of the machine 700.

In the example architecture of FIG. 6, the software architecture 602 may be conceptualized as a stack of layers, where each layer provides particular functionality. For example, the software architecture 602 may include layers such as an operating system 630, libraries 622, frameworks/middleware 616, applications 610, and a presentation layer 606. Operationally, the applications 610 or other components within the layers may invoke API calls through the software stack and receive a response, returned values, and so forth (illustrated as messages 656) in response to the API calls 658. The layers illustrated are representative in nature, and not all software architectures have all layers. For example, some mobile or special-purpose operating systems may not provide a frameworks/middleware 616 layer, while others may provide such a layer. Other software architectures may include additional or different layers.

The operating system 630 may manage hardware resources and provide common services. The operating system 630 may include, for example, a kernel 646, services 648, and drivers 632. The kernel 646 may act as an abstraction layer between the hardware and the other software layers. For example, the kernel 646 may be responsible for memory management, processor management (e.g., scheduling), component management, networking, security settings, and so on. The services 648 may provide other common services for the other software layers. The drivers 632 may be responsible for controlling or interfacing with the underlying hardware. For instance, the drivers 632 may include display drivers, camera drivers, Bluetooth^{®} drivers, flash memory drivers, serial communication drivers (e.g., Universal Serial Bus (USB) drivers), Wi-Fi^{®} drivers, audio drivers, power management drivers, and so forth depending on the hardware configuration.

The libraries 622 may provide a common infrastructure that may be utilized by the applications 610 and/or other components and/or layers. The libraries 622 typically provide functionality that allows other software modules to perform tasks in an easier fashion than by interfacing directly with the underlying operating system 630 functionality (e.g., kernel 646, services 648 or drivers 632). The libraries 618 (virtual machine 604) or 622 may include system libraries 624 (e.g., C standard library) that may provide functions such as memory allocation functions, string manipulation functions, mathematic functions, and the like. In addition, the libraries 618 or 622 may include API libraries 626 such as media libraries (e.g., libraries to support presentation and manipulation of various media formats such as MPEG4, H.264, MP3, AAC, AMR, JPG, and PNG), graphics libraries (e.g., an OpenGL framework that may be used to render 2D and 3D graphic content on a display), database libraries (e.g., SQLite that may provide various relational database functions), web libraries (e.g., WebKit that may provide web browsing functionality), and the like. The libraries 618 or 622 may also include a wide variety of other libraries 644 to provide many other APIs to the applications 610 or applications 612 (virtual machine 604) and other software components/modules.

The frameworks/middleware 616 may provide a higher-level common infrastructure that may be utilized by the applications 610 or other software components/modules. For example, the frameworks/middleware 616 may provide various graphical user interface functions, high-level resource management, high-level location services, and so forth. The frameworks/middleware 616 may provide a broad spectrum of other APIs that may be utilized by the applications 610 and/or other software components/modules, some of which may be specific to a particular operating system or platform.

The applications 610 include built-in applications 640 and/or third-party applications 642. Examples of representative built-in applications 640 may include, but are not limited to, a home application, a contacts application, a browser application, a book reader application, a location application, a media application, a messaging application, or a game application.

The third-party applications 642 may include any of the built-in applications 640 as well as a broad assortment of other applications. In a specific example, the third-party applications 642 (e.g., an application developed using the Android^{™} or iOS^{™} software development kit (SDK) by an entity other than the vendor of the particular platform) may be mobile software running on a mobile operating system such as iOS^{™}, Android^{™}, or other mobile operating systems. In this example, the third-party applications 642 may invoke the API calls 658 provided by the mobile operating system such as the operating system 630 to facilitate functionality described herein.

The applications 610 may utilize built-in operating system functions, libraries (e.g., system libraries 624, API libraries 626, and other libraries), or frameworks/middleware 616 to create user interfaces to interact with users of the system. Alternatively, or additionally, in some systems, interactions with a user may occur through a presentation layer, such as the presentation layer 608. In these systems, the application/module "logic" can be separated from the aspects of the application/module that interact with the user.

Some software architectures utilize virtual machines. In the example of FIG. 6, this is illustrated by a virtual machine 604. The virtual machine 604 creates a software environment where applications/modules can execute as if they were executing on a hardware machine. The virtual machine 604 is hosted by a host operating system (e.g., the operating system 630) and typically, although not always, has a virtual machine monitor 628, which manages the operation of the virtual machine 604 as well as the interface with the host operating system (e.g., the operating system 630). A software architecture executes within the virtual machine 604, such as an operating system 620, libraries 618, frameworks/middleware 614, applications 612, or a presentation layer 608. These layers of software architecture executing within the virtual machine 604 can be the same as corresponding layers previously described or may be different.

FIG. 7 is a block diagram illustrating components of a machine 700, according to some examples, able to read instructions from a machine-readable medium (e.g., a machine-readable storage medium) and perform any one or more of the methodologies discussed herein. Specifically, FIG. 7 shows a diagrammatic representation of the machine 700 in the example form of a computer system, in which instructions 710 (e.g., software, a program, an application, an applet, an app, or other executable code) cause the machine 700 to perform any one or more of the methodologies discussed herein. As such, the instructions 710 may be used to implement modules or components described herein. The instructions 710 transform the general, non-programmed machine 700 into a particular machine 700 programmed to carry out the described and illustrated functions in the manner described. In alternative embodiments, the machine 700 operates as a standalone device or may be coupled (e.g., networked) to other machines. In a networked deployment, the machine 700 may operate in the capacity of a server machine or a client machine in a server-client network environment, or as a peer machine in a peer-to-peer (or distributed) network environment. The machine 700 may comprise, but not be limited to, a server computer, a client computer, a personal computer (PC), a tablet computer, a laptop computer, a netbook, a personal digital assistant (PDA), an entertainment media system, a cellular telephone, a smart phone, a mobile device, a wearable device (e.g., a smart watch), other smart devices, a web appliance, a network router, a network switch, a network bridge, or any machine capable of executing the instructions 710 sequentially or otherwise, that specify actions to be taken by machine 700. Further, while only a single machine 700 is illustrated, the term "machine" shall also be taken to include a collection of machines that individually or jointly execute the instructions 710 to perform any one or more of the methodologies discussed herein.

The machine 700 may include processors 704, 708 and 712, memory/storage 706, and I/O components 718, which may be configured to communicate with each other such as via a bus 702. The memory/storage 706 may include a memory 714, such as a main memory, or other memory storage, and a storage unit 716, both accessible to the processors 704 such as via the bus 702. The storage unit 716 and memory 714 store the instructions 710 embodying any one or more of the methodologies or functions described herein. The instructions 710 may also reside, completely or partially, within the memory 714 within the storage unit 716, within at least one of the processors 704 (e.g., within the processor's cache memory), or any suitable combination thereof, during execution thereof by the machine 700. Accordingly, the memory 714, the storage unit 716, and the memory of processors 704 are examples of machine-readable media.

The I/O components 718 may include a wide variety of components to receive input, provide output, produce output, transmit information, exchange information, capture measurements, and so on. The specific I/O components 718 that are included in a particular machine 700 will depend on the type of machine. For example, portable machines such as mobile phones will likely include a touch input device or other such input mechanisms, while a headless server machine will likely not include such a touch input device. It will be appreciated that the I/O components 718 may include many other components that are not shown in FIG. 7. The I/O components 718 are grouped according to functionality merely for simplifying the following discussion and the grouping is in no way limiting. In various examples, the I/O components 718 may include output components 726 and input components 728. The output components 726 may include visual components (e.g., a display such as a plasma display panel (PDP), a light emitting diode (LED) display, a liquid crystal display (LCD), a projector, or a cathode ray tube [CRT]), acoustic components (e.g., speakers), haptic components (e.g., a vibratory motor, resistance mechanisms), other signal generators, and so forth. The input I/O components 728 may include alphanumeric input components (e.g., a keyboard, a touch screen configured to receive alphanumeric input, a photo-optical keyboard, or other alphanumeric input components), point based input components (e.g., a mouse, a touchpad, a trackball, a joystick, a motion sensor, or other pointing instrument), tactile input components (e.g., a physical button, a touch screen that provides location and/or force of touches or touch gestures, or other tactile input components), audio input components (e.g., a microphone), and the like.

In further examples, the I/O components 718 may include biometric components 730, motion components 734, environmental components 736, or position components 738 among a wide array of other components. For example, the biometric components 730 may include components to detect expressions (e.g., hand expressions, facial expressions, vocal expressions, body gestures, or eye tracking), measure biosignals (e.g., blood pressure, heart rate, body temperature, perspiration, or brain waves), identify a person (e.g., voice identification, retinal identification, facial identification, fingerprint identification, or electroencephalogram based identification), and the like. The motion components 734 may include acceleration sensor components (e.g., accelerometer), gravitation sensor components, rotation sensor components (e.g., gyroscope), and so forth. The environment components 736 may include, for example, illumination sensor components (e.g., photometer), temperature sensor components (e.g., one or more thermometer that detect ambient temperature), humidity sensor components, pressure sensor components (e.g., barometer), acoustic sensor components (e.g., one or more microphones that detect background noise), proximity sensor components (e.g., infrared sensors that detect nearby objects), gas sensors (e.g., gas detection sensors to detection concentrations of hazardous gases for safety or to measure pollutants in the atmosphere), or other components that may provide indications, measurements, or signals corresponding to a surrounding physical environment. The position components 738 may include location sensor components (e.g., a Global Position system (GPS) receiver component), altitude sensor components (e.g., altimeters or barometers that detect air pressure from which altitude may be derived), orientation sensor components (e.g., magnetometers), and the like.

Communication may be implemented using a wide variety of technologies. The I/O components 718 may include communication components 740 operable to couple the machine 700 to a network 732 or devices 720 via coupling 724 and coupling 722 respectively. For example, the communication components 740 may include a network interface component or other suitable device to interface with the network 732. In further examples, communication components 740 may include wired communication components, wireless communication components, cellular communication components, Near Field Communication (NFC) components, Bluetooth^{®} components (e.g., Bluetooth^{®} Low Energy), Wi-Fi^{®} components, and other communication components to provide communication via other modalities. The devices 720 may be another machine or any of a wide variety of peripheral devices (e.g., a peripheral device coupled via a Universal Serial Bus [USB]).

Moreover, the communication components 740 may detect identifiers or include components operable to detect identifiers. For example, the communication components 740 may include Radio Frequency Identification (RFID) tag reader components, NFC smart tag detection components, optical reader components (e.g., an optical sensor to detect one-dimensional bar codes such as Universal Product Code (UPC) bar code, multi-dimensional bar codes such as Quick Response (QR) code, Aztec code, Data Matrix, Dataglyph, MaxiCode, PDF417, Ultra Code, UCC RSS-2D bar code, and other optical codes), or acoustic detection components (e.g., microphones to identify tagged audio signals). In addition, a variety of information may be derived via the communication components 740, such as, location via Internet Protocol (IP) geo-location, location via Wi-Fi^{®} signal triangulation, location via detecting a NFC beacon signal that may indicate a particular location, and so forth.

### EXAMPLES

Example 1 is a system comprising: at least one processor; and at least one memory storing instructions that, when executed by the at least one processor, configure the system to perform operations comprising: receiving a data stream comprising a plurality of events from sensors within an Internet of Things (IoT) computing environment; applying a rate reduction method to generate an adjusted data stream by adjusting a rate of the data stream, the rate reduction method being based on an estimated response time for a stream analysis model; transmitting the adjusted data stream to the stream analysis model; based on receiving, from the stream analysis model, an output based on an event from the adjusted data stream, updating the estimated response time for the stream analysis model; storing the event and the output; and transmitting the event and the output to an automatic control system.

In Example 2, the subject matter of Example 1 includes, wherein the event corresponds to a triggering event associated with the stream analysis model, and wherein the operations further comprise updating a current response time estimate for the stream analysis model based on a response time associated with the receiving of the output from the stream analysis model.

In Example 3, the subject matter of Example 2 includes, wherein the operations further comprises: computing a difference between the estimated response time and the current response time estimate for the stream analysis model; and upon determining that a magnitude of the difference transgresses a pre-defined threshold, updating the estimated response time to correspond to the current response time estimate.

In Example 4, the subject matter of Example 3 includes, wherein the computing of the difference between the estimated response time and the current response time estimate is performed at a pre-defined evaluation interval associated with the stream analysis model.

In Example 5, the subject matter of Examples 1-4 includes, wherein the rate reduction method comprises identifying an event sequence in the data stream and generating a compound event corresponding to the event sequence.

In Example 6, the subject matter of Examples 1-5 includes, wherein the rate reduction method comprises applying one or more processing rules to the data stream to identify a subset of high-value events.

In Example 7, the subject matter of Examples 1-6 includes, wherein the rate reduction method comprises aggregating events using a sliding window of a pre-determined size, the aggregating of the events further comprising computing a value based on combining the aggregated events.

In Example 8, the subject matter of Examples 1-7 includes, the operations further comprising receiving an additional data stream comprising a plurality of additional events from the sensors within the Internet of Things (IoT) computing environment, and wherein the rate reduction method comprises: correlating the events in the data stream with the additional events in the additional data stream; and generating a unified data stream for transmitting to the stream analysis model.

Example 9 is a computer-implemented method comprising: receiving a data stream comprising a plurality of events from sensors within an Internet of Things (IoT) computing environment; applying a rate reduction method to generate an adjusted data stream by adjusting a rate of the data stream, the rate reduction method being based on an estimated response time for a stream analysis model; transmitting the adjusted data stream to the stream analysis model; based on receiving, from the stream analysis model, an output based on an event from the adjusted data stream, updating the estimated response time for the stream analysis model; storing the event and the output; and transmitting the event and the output to an automatic control system.

In Example 10, the subject matter of Example 9 includes, wherein the event corresponds to a triggering event associated with the stream analysis model, and wherein the method further comprises updating a current response time estimate for the stream analysis model based on a response time associated with the receiving of the output from the stream analysis model.

In Example 11, the subject matter of Example 10 includes, computing a difference between the estimated response time and the current response time estimate for the stream analysis model; and upon determining that a magnitude of the difference transgresses a pre-defined threshold, updating the estimated response time to correspond to the current response time estimate.

In Example 12, the subject matter of Example 11 includes, wherein the computing of the difference between the estimated response time and the current response time estimate is performed at a pre-defined evaluation interval associated with the stream analysis model.

In Example 13, the subject matter of Examples 9-12 includes, wherein the rate reduction method comprises identifying an event sequence in the data stream and generating a compound event corresponding to the event sequence.

In Example 14, the subject matter of Examples 9-13 includes, wherein the rate reduction method comprises applying one or more processing rules to the data stream to identify a subset of high-value events.

In Example 15, the subject matter of Examples 9-14 includes, wherein the rate reduction method comprises aggregating events using a sliding window of a pre-determined size, the aggregating of the events further comprising computing a value based on combining the aggregated events.

In Example 16, the subject matter of Examples 9-15 includes, receiving one or more additional data streams, each additional data stream of the one or more additional data streams comprising a plurality of additional events from the sensors within the Internet of Things (IoT) computing environment, and wherein the rate reduction method comprises: correlating the events in the data stream with additional events in the one or more additional data streams; and generating a unified data stream for transmitting to the stream analysis model.

Example 17 is a processor comprising: one or more circuits configured to adjust a data stream rate based on an estimated response time for a stream analysis model.

In Example 18, the subject matter of Example 17 includes, wherein the one or more circuits are further configured to: process a data stream associated with the data stream rate wherein the data stream comprises a plurality of events from sensors within an Internet of Things (IoT) computing environment; apply a rate reduction method to generate an adjusted data stream by adjusting the data stream rate of the data stream; transmit the adjusted data stream to the stream analysis model; and based on receiving, from the stream analysis model, an output based on an event from the adjusted data stream, update the estimated response time for the stream analysis model.

In Example 19, the subject matter of Example 18 includes, wherein the one or more circuits are further configured to: store the event and the output; and transmit the event and the output to an automatic control system.

In Example 20, the subject matter of Examples 17-19 includes, wherein the one or more circuits are further configured to: compute a difference between the estimated response time and the current response time estimate for the stream analysis model; and upon determining that a magnitude of the difference transgresses a pre-defined threshold, update the estimated response time to correspond to the current response time estimate.

Example 21 is at least one non-transitory machine-readable medium (or computer-readable medium) including instructions that, when executed by processing circuitry, cause the processing circuitry to perform operations to implement of any of Examples 1-20.

Example 22 is an apparatus comprising means to implement any of Examples 1-20.

Example 23 is a system to implement any of Examples 1-20.

Example 24 is a method to implement any of Examples 1-20.

### GLOSSARY

"CARRIER SIGNAL" in this context may include any intangible medium that is capable of storing, encoding, or carrying instructions for execution by the machine, and includes digital or analog communications signals or other intangible medium to facilitate communication of such instructions. Instructions may be transmitted or received over the network using a transmission medium via a network interface device and using any one of a number of well-known transfer protocols.

"CLIENT DEVICE" in this context may include any machine that interfaces to a communications network to obtain resources from one or more server systems or other client devices. A client device may be, but is not limited to, a mobile phone, desktop computer, laptop, portable digital assistants (PDAs), smart phones, tablets, ultra books, netbooks, laptops, multi-processor systems, microprocessor-based or programmable consumer electronics, game consoles, set-top boxes, or any other communication device that a user may use to access a network.

"COMMUNICATIONS NETWORK" in this context may include one or more portions of a network that may be an ad hoc network, an intranet, an extranet, a virtual private network (VPN), a local area network (LAN), a wireless LAN (WLAN), a wide area network (WAN), a wireless WAN (WWAN), a metropolitan area network (MAN), the Internet, a portion of the Internet, a portion of the Public Switched Telephone Network (PSTN), a plain old telephone service (POTS) network, a cellular telephone network, a wireless network, a Wi-Fi^{®} network, another type of network, or a combination of two or more such networks. For example, a network or a portion of a network may include a wireless or cellular network and the coupling may be a Code Division Multiple Access (CDMA) connection, a Global System for Mobile communications (GSM) connection, or other type of cellular or wireless coupling. In this example, the coupling may implement any of a variety of types of data transfer technology, such as Single Carrier Radio Transmission Technology (1xRTT), Evolution-Data Optimized (EVDO) technology, General Packet Radio Service (GPRS) technology, Enhanced Data rates for GSM Evolution (EDGE) technology, third Generation Partnership Project (3GPP) including 3G, fourth generation wireless (4G) networks, Universal Mobile Telecommunications System (UMTS), High Speed Packet Access (HSPA), Worldwide Interoperability for Microwave Access (WiMAX), Long Term Evolution (LTE) standard, others defined by various standard setting organizations, other long range protocols, or other data transfer technology.

"MACHINE-READABLE MEDIUM" (or "computer-readable medium") in this context may include a component, device or other tangible media able to store instructions and data temporarily or permanently and may include, but is not be limited to, random-access memory (RAM), read-only memory (ROM), buffer memory, flash memory, optical media, magnetic media, cache memory, other types of storage (e.g., Erasable Programmable Read-Only Memory [EEPROM]) and/or any suitable combination thereof. The term "machine-readable medium" should be taken to include a single medium or multiple media (e.g., a centralized or distributed database, or associated caches and servers) able to store instructions. The term "machine-readable medium" shall also be taken to include any medium, or combination of multiple media, that is capable of storing instructions (e.g., code) for execution by a machine, such that the instructions, when executed by one or more processors of the machine, cause the machine to perform any one or more of the methodologies described herein. Accordingly, a "machine-readable medium" may include a single storage apparatus or device, as well as "cloud-based" storage systems or storage networks that include multiple storage apparatus or devices. The term "machine-readable medium" excludes signals per se. The term "machine-readable medium" should be taken to include a non-transitory medium.

"COMPONENT" in this context may include a device, physical entity or logic having boundaries defined by function or subroutine calls, branch points, application program interfaces (APIs), or other technologies that provide for the partitioning or modularization of particular processing or control functions. Components may be combined via their interfaces with other components to carry out a machine process. A component may be a packaged functional hardware unit designed for use with other components and a part of a program that usually performs a particular function of related functions. Components may constitute either software components (e.g., code embodied on a machine-readable medium) or hardware components. A "hardware component" is a tangible unit capable of performing certain operations and may be configured or arranged in a certain physical manner. In various examples, one or more computer systems (e.g., a standalone computer system, a client computer system, or a server computer system) or one or more hardware components of a computer system (e.g., a processor or a group of processors) may be configured by software (e.g., an application or application portion) as a hardware component that operates to perform certain operations as described herein. A hardware component may also be implemented mechanically, electronically, or any suitable combination thereof. For example, a hardware component may include dedicated circuitry or logic that is permanently configured to perform certain operations. A hardware component may be a special-purpose processor, such as a Field-Programmable Gate Array (FPGA) or an Application Specific Integrated Circuit (ASIC). A hardware component may also include programmable logic or circuitry that is temporarily configured by software to perform certain operations. For example, a hardware component may include software executed by a general-purpose processor or other programmable processor. Once configured by such software, hardware components become specific machines (or specific components of a machine) uniquely tailored to perform the configured functions and are no longer general-purpose processors. It will be appreciated that the decision to implement a hardware component mechanically, in dedicated and permanently configured circuitry, or in temporarily configured circuitry (e.g., configured by software) may be driven by cost and time considerations. Accordingly, the phrase "hardware component"(or "hardware-implemented component") should be understood to encompass a tangible entity, be that an entity that is physically constructed, permanently configured (e.g., hardwired), or temporarily configured (e.g., programmed) to operate in a certain manner or to perform certain operations described herein. Considering embodiments in which hardware components are temporarily configured (e.g., programmed), each of the hardware components need not be configured or instantiated at any one instance in time. For example, where a hardware component comprises a general-purpose processor configured by software to become a special-purpose processor, the general-purpose processor may be configured as respectively different special-purpose processors (e.g., comprising different hardware components) at different times. Software accordingly configures a particular processor or processors, for example, to constitute a particular hardware component at one instance of time and to constitute a different hardware component at a different instance of time. Hardware components can provide information to, and receive information from, other hardware components. Accordingly, the described hardware components may be regarded as being communicatively coupled. Where multiple hardware components exist contemporaneously, communications may be achieved through signal transmission (e.g., over appropriate circuits and buses) between or among two or more of the hardware components. In embodiments in which multiple hardware components are configured or instantiated at different times, communications between such hardware components may be achieved, for example, through the storage and retrieval of information in memory structures to which the multiple hardware components have access. For example, one hardware component may perform an operation and store the output of that operation in a memory device to which it is communicatively coupled. A further hardware component may then, at a later time, access the memory device to retrieve and process the stored output. Hardware components may also initiate communications with input or output devices, and can operate on a resource (e.g., a collection of information). The various operations of example methods described herein may be performed, at least partially, by one or more processors that are temporarily configured (e.g., by software) or permanently configured to perform the relevant operations. Whether temporarily or permanently configured, such processors may constitute processor-implemented components that operate to perform one or more operations or functions described herein. As used herein, "processor-implemented component" may include a hardware component implemented using one or more processors. Similarly, the methods described herein may be at least partially processor-implemented, with a particular processor or processors being an example of hardware. For example, at least some of the operations of a method may be performed by one or more processors or processor-implemented components. Moreover, the one or more processors may also operate to support performance of the relevant operations in a "cloud computing" environment or as a "software as a service" (SaaS). For example, at least some of the operations may be performed by a group of computers (as examples of machines including processors), with these operations being accessible via a network (e.g., the Internet) and via one or more appropriate interfaces (e.g., an Application Program Interface [API]). The performance of certain of the operations may be distributed among the processors, not only residing within a single machine, but deployed across a number of machines. In some examples, the processors or processor-implemented components may be located in a single geographic location (e.g., within a home environment, an office environment, or a server farm). In other examples, the processors or processor-implemented components may be distributed across a number of geographic locations.

"PROCESSOR" in this context may include any circuit or virtual circuit (a physical circuit emulated by logic executing on an actual processor) that manipulates data values according to control signals (e.g., "commands", "op codes", "machine code", etc. ) and which produces corresponding output signals that are applied to operate a machine. A processor may, for example, be a Central Processing Unit (CPU), a Reduced Instruction Set Computing (RISC) processor, a Complex Instruction Set Computing (CISC) processor, a Graphics Processing Unit (GPU), a Digital Signal Processor (DSP), an Application Specific Integrated Circuit (ASIC), a Radio-Frequency Integrated Circuit (RFIC) or any combination thereof. A processor may further be a multi-core processor having two or more independent processors (sometimes referred to as "cores") that may execute instructions contemporaneously.

"TIMESTAMP" in this context may include a sequence of characters or encoded information identifying when a certain event occurred, for example giving date and time of day, sometimes accurate to a small fraction of a second.

"TIME DELAYED NEURAL NETWORK (TDNN)" in this context, a TDNN may include an artificial neural network architecture whose primary purpose is to work on sequential data. An example would be converting continuous audio into a stream of classified phoneme labels for speech recognition.

"BI-DIRECTIONAL LONG-SHORT TERM MEMORY (BLSTM)" in this context may include a recurrent neural network (RNN) architecture that remembers values over arbitrary intervals. Stored values are not modified as learning proceeds. RNNs allow forward and backward connections between neurons. BLSTM are well-suited for the classification, processing, and prediction of time series, given time lags of unknown size and duration between events.

### NOTES

Although example methods disclosed herein depict particular sequences of operations, the sequences may be altered without departing from the scope of the present disclosure. For example, some of the operations depicted may be performed in parallel or in a different sequence that does not materially affect the function of a respective method. In other examples, different components of an example device or system that implements the method may perform functions at substantially the same time or in a specific sequence.

## Claims

1. A system (700) comprising:
at least one processor (704); and
at least one memory (706) storing instructions (710) that, when executed by the at least one processor, configure the system to perform operations comprising:
receiving a data stream comprising a plurality of events from sensors within an Internet of Things, IoT, computing environment;
applying a rate reduction method to generate an adjusted data stream by adjusting a rate of the data stream, the rate reduction method being based on an estimated response time for a stream analysis model;
transmitting the adjusted data stream to the stream analysis model;
based on receiving, from the stream analysis model, an output based on an event from the adjusted data stream, updating the estimated response time for the stream analysis model;
storing the event and the output; and
transmitting the event and the output to an automatic control system.

2. The system of claim 1, wherein the event corresponds to a triggering event associated with the stream analysis model, and wherein the operations further comprise updating a current response time estimate for the stream analysis model based on a response time associated with the receiving of the output from the stream analysis model.

3. The system of claim 1 or claim 2, wherein the operations further comprise:
computing a difference between the estimated response time and the current response time estimate for the stream analysis model; and
upon determining that a magnitude of the difference transgresses a pre-defined threshold, updating the estimated response time to correspond to the current response time estimate.

4. The system of claim 3, wherein the computing of the difference between the estimated response time and the current response time estimate is performed at a pre-defined evaluation interval associated with the stream analysis model.

5. The system of any one of claims 1 to 4, wherein the rate reduction method comprises:
identifying an event sequence in the data stream and generating a compound event corresponding to the event sequence, and/or
applying one or more processing rules to the data stream to identify a subset of high-value events, and/or
aggregating events using a sliding window of a pre-determined size, the aggregating of the events further comprising computing a value based on combining the aggregated events.

6. The system of any one of claims 1 to 5, the operations further comprising receiving an additional data stream comprising a plurality of additional events from the sensors within the Internet of Things, IoT, computing environment, and wherein the rate reduction method comprises:
correlating the events in the data stream with the additional events in the additional data stream; and
generating a unified data stream for transmitting to the stream analysis model.

7. A computer-implemented method comprising:
receiving (402), at a computing device, a data stream comprising a plurality of events from sensors within an Internet of Things, IoT, computing environment;
applying a rate reduction method to generate an adjusted data stream by adjusting (404) a rate of the data stream, the rate reduction method being based on an estimated response time for a stream analysis model;
transmitting (406) the adjusted data stream to the stream analysis model;
based on receiving (408), from the stream analysis model, an output based on an event from the adjusted data stream, updating (410) the estimated response time for the stream analysis model;
storing (412) the event and the output; and
transmitting (414) the event and the output to an automatic control system.

8. The computer-implemented method of claim 7, wherein the event corresponds to a triggering event associated with the stream analysis model, and wherein the method further comprises updating a current response time estimate for the stream analysis model based on a response time associated with the receiving of the output from the stream analysis model.

9. The computer-implemented method of claim 8, further comprising:
computing a difference between the estimated response time and the current response time estimate for the stream analysis model; and
upon determining that a magnitude of the difference transgresses a pre-defined threshold, updating the estimated response time to correspond to the current response time estimate,
wherein the computing of the difference between the estimated response time and the current response time estimate is optionally performed at a pre-defined evaluation interval associated with the stream analysis model.

10. The computer-implemented method of any one of claims 9 to 12, wherein the rate reduction method comprises:
identifying an event sequence in the data stream and generating a compound event corresponding to the event sequence, and/or
applying one or more processing rules to the data stream to identify a subset of high-value events, and/or
aggregating events using a sliding window of a pre-determined size, the aggregating of the events further comprising computing a value based on combining the aggregated events.

11. The computer-implemented method of any one of claims 7 to 10, further comprising receiving one or more additional data streams, each additional data stream of the one or more additional data streams comprising a plurality of additional events from the sensors within the Internet of Things, IoT, computing environment, and wherein the rate reduction method comprises:
correlating the events in the data stream with additional events in the one or more additional data streams; and
generating a unified data stream for transmitting to the stream analysis model.

12. A processor comprising: one or more circuits configured to adjust a data stream rate based on an estimated response time for a stream analysis model.

13. The processor of claim 12, wherein the one or more circuits are further configured to:
process a data stream associated with the data stream rate wherein the data stream comprises a plurality of events from sensors within an Internet of Things, IoT, computing environment;
apply a rate reduction method to generate an adjusted data stream by adjusting the data stream rate of the data stream;
transmit the adjusted data stream to the stream analysis model; and
based on receiving, from the stream analysis model, an output based on an event from the adjusted data stream, update the estimated response time for the stream analysis model.
storing the event and the output; and
transmitting the event and the output to an automatic control system.

14. The processor of claim 13, wherein the event corresponds to a triggering event associated with the stream analysis model, and wherein the one or more circuits are further configured to update a current response time estimate for the stream analysis model based on a response time associated with the receiving of the output from the stream analysis model.

15. The processor of any one of claims 12 to 14, wherein the one or more circuits are further configured to:
compute a difference between the estimated response time and the current response time estimate for the stream analysis model; and
upon determining that a magnitude of the difference transgresses a pre-defined threshold, update the estimated response time to correspond to the current response time estimate.
